# EUROPÄISCHE PATENTSCHRIFT

(11) **EP 2 110 591 B1**
(45) Veröffentlichungstag und Bekanntmachung des Hinweises auf die Patenterteilung: **15.09.2010**
(21) Anmeldenummer: 09000628.9
(22) Anmeldetag: 17.01.2009
(51) Int. Cl.: F16K 31/06

(54) **Ventil**
Valve
Soupape

(30) Priorität: 18.04.2008 DE 102008019453
(43) Veröffentlichungstag der Anmeldung: 21.10.2009
(73) Patentinhaber: FESTO AG & Co. KG, 73734 Esslingen (DE)
(72) Erfinder: Schnatterer, Jürgen, 72649 Wolfschlugen (DE)
(74) Vertreter: Abel, Martin

(56) Entgegenhaltungen:
- EP-A- 0 764 803
- DE-A1- 2 208 218
- DE-A1- 2 315 325
- DE-A1- 19 636 781
- DE-U1- 8 408 052

## Beschreibung

Die Erfindung betrifft ein Ventil, mit einer in einem Ventilgehäuse ausgebildeten Ventilkammer, die von einem einem ersten Ventilkanal zugeordneten ersten Ventilsitz und einem diesbezüglich axial beabstandeten, einem zweiten Ventilkanal zugeordneten zweiten Ventilsitz begrenzt ist und in die außerdem ein dritter Ventilkanal einmündet, wobei jedem Ventilsitz einer von zwei Verschlusskörpern eines Ventilgliedes gegenüberliegt, die an einem durch eine elektromagnetische Antriebseinrichtung linear bewegbaren Tragkörper des Ventilgliedes relativ zu dem Tragkörper und relativ zueinander bewegbar angeordnet sind, ferner mit Federmitteln, durch die die beiden Verschlusskörper relativ zum Tragkörper in Richtung zum jeweils gegenüberliegenden Ventilsitz beaufschlagt sind, so dass in einer Mittelstellung des Tragkörpers beide Verschlusskörper am jeweils gegenüberliegenden Ventilsitz dichtend anliegen, und mit am Tragkörper angeordneten Anschlagmitteln, durch die bei einer durch die elektromagnetische Antriebseinrichtung verursachten axialen Auslenkung des Tragkörpers aus der Mittelstellung einer der Verschlusskörper mitgenommen und vom zugeordneten Ventilsitz abgehoben wird.

Ein aus der EP 0764803 B1 bekanntes Ventil dieser Art enthält ein Ventilglied mit einem stößelartigen Tragkörper, auf dem zwei hülsenförmige Verschlusskörper axial bewegbar angeordnet sind. Jeder Verschlusskörper kooperiert mit einem von zwei Ventilsitzen, die jeweils einem Ventilkanal zugeordnet sind und die mit einander entgegengesetzter Orientierung in einem Ventilgehäuse ausgebildet sind, wobei sie eine mit einem dritten Ventilkanal verbundene Ventilkammer begrenzen. Zur Betätigung des Ventils ist ein Endabschnitt des stößelförmigen Tragkörpers mit einem Permanentmagnet bestückt, der zu einer elektromagnetischen Antriebseinrichtung gehört, mit deren Hilfe auf den Tragkörper eine Stellkraft ausgeübt werden kann. In einer Mittelstellung des Tragkörpers liegen die Verschlusskörper an beiden Ventilsitzen dichtend an. Bei Auslenkung in der einen oder anderen Richtung behält der eine Verschlusskörper die Schließstellung bei, während der andere Verschlusskörper durch die Anschlagmittel vom zugeordneten Ventilsitz abgehoben wird und dadurch eine Strömungsverbindung zwischen zwei Ventilkanälen freigegeben wird.

Das bekannte Ventil arbeitet zwar einwandfrei, ist jedoch relativ voluminös. Ferner lässt sich mit ihm zwar ein relativ großer Ventilhub realisieren, die durch die elektrodynamisch arbeitende Antriebseinrichtung hervorrufbaren Stellkräfte sind jedoch begrenzt, so dass eine Steuerung hoher Fluiddrücke nur eingeschränkt möglich ist.

Aus der DE 8408052 U1 ist bereits ein Drosselventil bekannt, bei dem in einer Gehäusekammer ein Ankerkörper angeordnet ist, der durch zwei Spuleneinheiten verstellbar ist, um auf wahlweise eine von zwei Drosselstellen einzuwirken. Ein gleichzeitiges Verschließen beider Drosselstellen ist bei dieser Konstruktion nicht möglich. Auch können bedingt durch offensichtlich fehlende Rückschlussmittel nur relativ niedrige Stellkräfte erzeugt werden.

Aus der DE 196 36 781 A1 ist ein Magnetventil bekannt, das einen zwischen zwei Schaltstellungen umschaltbaren Anker aufweist, der zwei fest angeordnete Verschlusskörper trägt. Durch eine Permanentmagneteinrichtung ist der Anker normalerweise in einer ersten Schaltstellung fixiert. Zum Umschalten in die andere Schaltstellung wird eine Spuleneinrichtung aktiviert, die über zwei derart miteinander verschaltete Spuleneinheiten verfügt, dass bei der Aktivierung die eine Spuleneinheit das Permanentmagnetfeld kompensiert und die andere Spuleneinheit den Umschaltvorgang herbeiführt. Nach dem Umschalten kann die für die Kompensation verantwortliche Spuleneinheit abgeschaltet werden, um die Stromaufnahme und die Wärmeentwicklung zu reduzieren. Der die Verschlusskörper aufweisende Anker fungiert als gemeinsamer Anker beider Spuleneinheiten.

Ein aus der DE 23 15 325 A bekanntes Magnetventil verfügt über zwei koaxial aufeinanderfolgend angeordnete Elektromagnete mit je einem eigenen, als Ventilglied fungierenden Anker. Die beiden Anker sind in einer Ventilkammer aufgenommen und an den von einander wegweisenden Stirnseiten mit Verschlusskörpern versehen, die mit einander zugewandten Ventilsitzen kooperieren. Die Ventilglieder sind unabhängig voneinander betätigbar.

Die DE 22 08 218 A beschreibt ein bistabiles Magnetventil mit einem in einer Ventilkammer angeordneten Ventilglied, das als gemeinsamer Anker zweier Elektromagnete fungiert. Die Ventilkammer liegt axial zwischen den Spuleneinheiten der beiden Elektromagnete und ist von einem ringförmigen Dauermagnet umschlossen, der für die stabilen Schaltstellungen verantwortlich ist. Das Ventilglied setzt sich aus einem Tragkörper und fest daran angeordneten Verschlusskörpern zusammen, so dass es wie im Falle der DE 196 36 781 A1 stets nur mit einem der beiden Ventilsitze kooperieren kann und keine Mittelstellung aufweist.

Es ist die Aufgabe der vorliegenden Erfindung, ein Ventil der eingangs genannten Art zu schaffen, das bei kompakten Abmessungen relativ hohe Stellkräfte ermöglicht.

Zur Lösung dieser Aufgabe ist vorgesehen, dass die elektromagnetische Antriebseinrichtung zwei koaxial aufeinanderfolgend angeordnete Elektromagnete mit je mindestens einer bestrombaren Spuleneinheit und einem von axial außen her in den Spuleninnenraum hineinragenden ortsfesten Rückschlussteil enthält, wobei die Ventilkammer im Übergangsbereich zwischen den beiden Spuleneinheiten angeordnet ist und sich ein Stückweit in die beiden Spuleninnenräume hinein erstreckt, wo sie axial von den beiden Rückschlussteilen begrenzt ist, und dass die beiden Ventilsitze an den einander zugewandten inneren Stirnseiten der Rückschlussteile angeordnet sind und der Tragkörper des in der Ventilkammer angeordneten Ventilgliedes als gemeinsamer Anker der beiden Elektromagnete ausgebildet ist.

Bei einem solchen Ventil sind die Ventilsitze einander zugewandt, so dass bei der ausgehend von der Mittelstellung erfolgenden Auslenkung des Tragkörpers der jeweils entgegen der Bewegungsrichtung orientierte Verschlusskörper durch die Anschlagmittel mitgenommen und vom zugeordneten Ventilsitz abgehoben wird. Der in der Bewegungsrichtung orientierte Verschlusskörper wird unter Beibehaltung seiner Schließstellung gegen den zugeordneten Ventilsitz gedrückt. Die axiale Begrenzung der Ventilkammer übernehmen in die Spuleninnenräume hineinragende Rückschlussteile, die folglich sehr nahe an den als gemeinsamer Anker fungierenden Tragkörper herangeführt werden können, so dass kleine Luftspalte und mithin hohe Stellkräfte realisierbar sind. Die beiden Ventilsitze sind direkt an den Rückschlussteilen angeordnet, was eine kostengünstige Herstellung und Montage ermöglicht. Die beiden Spuleneinheiten können axial unmittelbar aneinander anschließend angeordnet werden, so dass sie gemeinsam die Ventilkammer für das Ventilglied bilden und sich das Ventil durch ein nur geringes Totvolumen auszeichnet. Je nach Art der Ansteuerung der beiden Elektromagnete kann das Ventil als Proportionalventil oder als Schaltventil betrieben werden.

Vorteilhafte Weiterbildungen der Erfindung gehen aus den Unteransprüchen hervor.

Die beiden Verschlusskörper sind vorzugsweise im Bereich der Stirnseiten des Tragkörpers angeordnet. Auf diese Weise kann das Ventilglied zur Gänze im Innern der Ventilkammer untergebracht werden.

Es wäre denkbar, jedem Verschlusskörper eigene Federmittel zuzuordnen, die zwischen dem betreffenden Verschlusskörper und dem Tragkörper wirksam sind. Einfacher und kompakter ist allerdings eine Bauform, bei der die Federmittel ausschließlich zwischen den beiden Verschlusskörpern wirksam sind, ohne sich gleichzeitig auch am Tragkörper abzustützen.

Vorzugsweise ist der Tragkörper rohrförmig strukturiert und nimmt in seinem Innern die beiden Verschlusskörper und die Federmittel auf.

Insbesondere für einen Betrieb als Proportionalventil ist es von Vorteil, wenn die einander zugewandten Stirnflächen der Rückschlussteile und des Tragkörpers komplementär konisch ausgebildet sind, so dass sie ineinander eintauchen können. Wie sich gezeigt hat, ergibt sich bei einer solchen Auslegung eine besonders günstige Kraft-Weg-Kennlinie.

Die erforderlichen fluidischen Anschlüsse können sehr bequem durchgeführt werden, wenn die beiden Ventilkanäle das jeweils zugeordnete Rückschlussteil koaxial durchsetzen und an dessen äußerer Stirnfläche ausmünden.

Der dritte Ventilkanal kann prinzipiell an beliebiger Stelle in die Ventilkammer einmünden. Er kann beispielsweise axial verlaufen und ebenfalls eines der Rückschlussteile durchsetzen, wobei er abseits des diesem Rückschlussteil zugeordneten Ventilsitzes in die Ventilkammer einmündet. Als besonders vorteilhaft wird allerdings eine Bauform angesehen, bei der der dritte Ventilkanal umfangsseitig in die Ventilkammer einmündet, insbesondere in den axial zwischen den beiden Spuleneinheiten liegenden Bereich.

Zur Strömungsführung im aus der Mittelstellung ausgelenkten Zustand des Tragkörpers sind zweckmäßigerweise zwei Überströmkanäle vorhanden, die jeweils einen der beiden endseitigen Ventilkammerabschnitte mit dem Einmündungsbereich des dritten Ventilkanals verbinden. Vorteilhaft ist hier insbesondere eine Ausgestaltung als Nuten, entweder am Innenumfang der Spuleninnenräume oder am Außenumfang des Tragkörpers oder an beiden dieser Komponenten. Als besonders zweckmäßig hat sich eine Bauform erwiesen, bei der mindestens eine sich über die Länge des Tragkörpers hinweg erstreckende Längsnut vorhanden ist, die die Funktion beider Überströmkanäle übernimmt. Es ist besonders zweckmäßig, wenn diese Längsnut im Tragkörper ausgebildet ist.

Ohne weiteres können mehrere solcher Längsnuten in der Umfangsrichtung um den Tragkörper herum verteilt angeordnet sein, wobei dann zweckmäßigerweise eine sich um den Tragkörper herum erstreckende zusätzliche Ringnut vorhanden ist, um alle Längsnuten gemeinsam mit dem Einmündungsbereich des dritten Ventilkanals zu verbinden. Auf diese Weise erübrigen sich auch besondere Verdrehsicherungsmaßnahmen bezüglich des Tragkörpers.

Mehrere über den Umfang verteilte Längsnuten vergrößern den Strömungsquerschnitt und folglich die maximal mögliche Strömungsrate.

Ist nur eine Längsnut vorhanden, empfiehlt es sich, zur Aufrechterhaltung der fluchtenden Zuordnung zum Einmündungsbereich des dritten Ventilkanals geeignete Verdrehsicherungsmittel vorzusehen.

Es versteht sich, dass auch andere Strömungswege zur Verfügung gestellt werden können, um den Fluidübertritt zwischen dem dritten Ventilkanal und jedem der beiden anderen Ventilkanäle zu ermöglichen, wenn der Tragkörper die entsprechende Schaltstellung einnimmt.

Die Rückschlussteile sind zweckmäßigerweise Bestandteile von je einer Rückschlusseinrichtung, die aus einem ferritischen Material, insbesondere aus Eisen, besteht, wie zweckmäßigerweise auch der als Anker fungierende Tragkörper. Eine sehr kompakte Anordnung wird dadurch begünstigt, dass die beiden Rückstelleinrichtungen zu einer als Rückschlusseinheit bezeichenbaren Baueinheit zusammengefasst sind. Die Rückschlusseinheit kann hier eine klammerartige Halteeinrichtung bilden, die die Spuleneinheiten zusammenhält.

Nachfolgend wird die Erfindung anhand der beiliegenden Zeichnung näher erläutert. In dieser zeigen:
- Figur 1: einen Längsschnitt durch eine bevorzugte Ausfüh- rungsform des erfindungsgemäßen Ventils in der Mit- telstellung des Tragkörpers,
- Figur 2: einen ausschnittsweisen Querschnitt durch das Ventil aus Figur 1 gemäß Schnittlinie II-II und
- Figur 3: einen das Ventilglied umfassenden Ausschnitt aus der Figur 1 in einem aus der Mittelstellung ausge- lenkten Zustand des Tragelementes.

Das in seiner Gesamtheit mit Bezugsziffer 1 bezeichnete Ventil enthält ein von einer aus ferritischem Material, insbesondere aus Eisen, bestehenden Rückschlusseinheit 2 gebildetes Ventilgehäuse 3. Allerdings wäre es denkbar, um die Rückschlusseinheit 2 herum ein eigenständiges Ventilgehäuse zu platzieren.

Die Rückschlusseinheit 2 enthält ein im Wesentlichen E-förmiges Rückschlussteil 4 mit zwei in Achsrichtung einer Hauptrichtung 5 zueinander beabstandeten Außenschenkeln 6, 7 und einem dazwischen angeordneten Innenschenkel 8, wobei Letzterer über je einen Verbindungssteg 9 mit den beiden Außenschenkeln 6, 7 verbunden ist.

Der Innenschenkel 8 und die beiden Außenschenkel 6, 7 sind zweckmäßigerweise plattenförmig ausgebildet, wobei ihre Hauptausdehnungsebenen rechtwinkelig zu der Hauptachse 5 verlaufen.

Der Innenschenkel 8 begrenzt jeweils zusammen mit einem der Verbindungsstege 9 und einem der Außenschenkel 6 oder 7 einen ersten und zweiten Aufnahmeraum 12, 13, wobei der erste Aufnahmeraum 12 eine erste elektrisch bestrombare Spuleneinheit 14 und der zweite Aufnahmeraum 13 eine zweite elektrisch bestrombare Spuleneinheit 15 aufnimmt.

Die beiden Spuleneinheiten 14, 15 sind koaxial zueinander angeordnet und folgen einander axial aufeinander. Sie definieren jeweils einen zentralen, axial durchgehenden und bevorzugt kreiszylindrisch konturierten Hohlraum, der als Spuleninnenraum 14a, 15a bezeichnet sei. Die Querschnitte und Durchmesser der beiden Spuleninnenräume 14a, 15a sind insbesondere identisch.

Jede Spuleneinheit 14, 15 verfügt über einen vorzugsweise aus einem Kunststoffmaterial bestehenden Spulenträger 16 und mindestens eine darauf gewickelte Spule 17. Der Spulenträger 16 enthält einen unmittelbar den Spuleninnenraum 14a, 15a umfangsseitig begrenzenden rohrförmigen Spulenträgerkern 18 und zwei sich stirnseitig beidseits daran anschließende Abschlussflansche 22.

Von der ersten Spuleneinheit 14 ragen zwei Anschlusskontakte 23a, 23b weg, die die Bestromung der zugeordneten mindestens einen Spule 17 mit der gewünschten Polarisierungsrichtung ermöglichen. Der Anschlusskontakt 23b ist hierbei zugleich an die mindestens eine Spule 17 der zweiten Spuleneinheit 15 angeschlossen, von der noch ein dritter Anschlusskontakt 23c wegragt, um auch die zweite Spuleneinheit 15 mit gewünschter Polarisierung bestromen zu können. Über den gemeinsam zugeordneten Anschlusskontakt 23b können die beiden Spuleneinheiten 14, 15 einheitlich an Masse gelegt werden.

Es versteht sich, dass abweichend vom Ausführungsbeispiel jede Spuleneinheit 14, 15 auch vollständig mit eigenen Anschlusskontakten ausgestattet sein kann.

Der Innenschenkel 8 und die beiden Außenschenkel 7 sind in koaxialer Verlängerung der Spuleninnenräume 14a, 15a mit je einer zentralen Durchbrechung 24 versehen. Durch die zentralen Durchbrechungen 24 der Außenschenkel 7 hindurch ragt jeweils ein stabförmiges Rückschlussteil 25 der Rückschlusseinheit 2 in den zugeordneten Spuleninnenraum 14a, 15a hinein. Es ist im Bereich der zentralen Durchbrechung 24 mit dem betreffenden Außenschenkel 7 fest verbunden, beispielsweise eingepresst oder eingeklebt.

Die einander zugewandten inneren Stirnflächen 26 der stabförmigen Rückschlussteile 25 liegen sich in Achsrichtung der Hauptachse 5, also axial, mit Abstand gegenüber. Sie bilden auf diese weise die stirnseitigen Abschlusswände einer Ventilkammer 27, die im Übergangsbereich der beiden Spuleneinheiten 14, 15 angeordnet ist und deren Außenumfang durch die zwischen den beiden Stirnflächen 26 liegenden Umfangsabschnitte der beiden Spuleninnenräume 14a, 15a begrenzt wird, sowie eventuell zusätzlich noch von der Wandung der zentralen Durchbrechung 24 des Innenschenkels 8.

Das stabförmige Rückschlussteil 25 der ersten Spuleneinheit 14 ist koaxial von einem ersten Ventilkanal 28 durchsetzt. Ein zweiter Ventilkanal 29 durchsetzt in ebenfalls koaxialer Anordnung das stabförmige Rückschlussteil 25 der zweiten Spuleneinheit 15.

Die ersten und zweiten Ventilkanäle 28, 29 münden einenends zur äußeren Stirnfläche des jeweiligen stabförmigen Rückschlussteils 25 aus. Bei einer bevorzugten Betriebsweise des Ventils 1 wird der erste Ventilkanal 28 als Abführkanal genutzt, der auf diese Weise unmittelbar mit der Atmosphäre R in Verbindung steht. Der zweite Ventilkanal 29 wird als Speisekanal genutzt und ist an seinem äußeren Endabschnitt mit Anschlussmitteln versehen, die es ermöglichen, eine fluidische Verbindung zu einer externen Druckquelle P herzustellen.

Mit ihren inneren Endabschnitten münden der erste und zweite Ventilkanal 28, 29 zur jeweils zugeordneten inneren Stirnfläche 26 aus, wobei die Mündung jeweils von einem axial orientierten Ventilsitz 28a, 28b umrahmt ist, der unmittelbar vom jeweils zugeordneten stabförmigen Rückschlussteil 25 gebildet ist. Die beiden Ventilsitze 28a, 28b sind einander axial zugewandt.

Ein dritter Ventilkanal 30 mündet abseits der beiden Ventilsitze 28a, 28b ebenfalls in die Ventilkammer 27 ein. Sein Einmündungsbereich 33 liegt vorzugsweise am Außenumfang der Ventilkammer 27 und ist hier insbesondere in dem zwischen den beiden Spuleneinheiten 14, 15 liegenden Bereich angeordnet.

Bei einer nur strichpunktiert angedeuteten abgewandelten Variante durchsetzt der dritte Ventilkanal 30 eines der stabförmigen Rückschlussteile 25 zusätzlich zu dem dort bereits vorhandenen ersten oder zweiten Ventilkanal 28, 29 und mündet neben dem Ventilsitz 28a, 28b zur zugeordneten inneren Stirnfläche 26 aus.

In der Ventilkammer 27 ist ein insgesamt mit Bezugsziffer 34 bezeichnetes, bevorzugt längliches Ventilglied aufgenommen. Das Ventilglied 34 enthält einen länglichen Tragkörper 35, der vorzugsweise rohrförmig ausgebildet ist und dessen Längsachse mit der Hauptachse 5 zusammenfällt.

Der Tragkörper 35 ist in Achsrichtung der Hauptachse 5 relativ zu den beiden Spuleneinheiten 14, 15 und auch relativ zu den beiden stabförmigen Rückschlussteilen 25 linear verschiebbar. Die entsprechende Bewegung sei als Steuerbewegung bezeichnet und ist in der Zeichnung bei 36 durch einen Doppelpfeil kenntlich gemacht.

Der Tragkörper 35 liegt vorzugsweise am Innenumfang der beiden Spuleninnenräume 14a, 15a an und erfährt dadurch eine Linearführung, so dass er bei Ausführung der Steuerbewegung 36 nicht verkanten kann.

Der Tragkörper 35 ist zur Gänze im Innern der Ventilkammer 27 aufgenommen. Im Bereich seiner beiden Stirnseiten trägt er jeweils einen Verschlusskörper, die im Folgenden zur besseren Unterscheidung als erster Verschlusskörper 37a und zweiter Verschlusskörper 37b bezeichnet seien.

Die Verschlusskörper 37a, 37b sind an dem Tragkörper 35 relativ zu diesem und auch relativ zueinander in der Achsrichtung der Hauptachse 5 bewegbar und insbesondere verschiebbar gelagert. Sie weisen an ihren voneinander wegweisenden äußeren Stirnseiten je eine Verschlussfläche 38 auf, die am jeweils gegenüberliegenden ersten beziehungsweise zweiten Ventilsitz 28a, 28b anliegen kann und hierbei gleichzeitig die Mündung des zugeordneten ersten beziehungsweise zweiten Ventilkanals 28, 29 dicht verschließt.

Beim Ausführungsbeispiel bestehen die Verschlusskörper 37a, 37b jeweils vollständig aus einem Material mit gummielastischen Eigenschaften. Sie könnten allerdings auch aus einem anderen Material bestehen, das die erforderlichen Dichteigenschaften aufweist. Ferner können die Verschlusskörper 37a, 37b jeweils einen aus beliebigem Material bestehenden Grundkörper aufweisen, der mit einem die Verschlussfläche 38 definierenden weiteren Material versehen ist.

Das Ventilglied 34 verfügt des Weiteren über zweckmäßigerweise im Innenraum des als Hohlkörper ausgebildeten Tragkörpers 35 angeordnete Federmittel 43, durch die die Verschlusskörper 37a, 37b relativ zum Tragkörper 35 in Richtung zum jeweils zugeordneten Ventilsitz 28a, 28b beaufschlagt werden. Exemplarisch sind die beispielsweise aus einer Druckfeder bestehenden Federmittel 43 axial zwischen den beiden Verschlusskörpern 37a, 37b angeordnet und drücken diese voneinander weg. Dadurch wird der erste Verschlusskörper 37a in Richtung des ersten Ventilsitzes 28a und der zweite Verschlusskörper 37b in Richtung des zweiten Ventilsitzes 28b in nachgiebiger Weise beaufschlagt.

Abweichend vom Ausführungsbeispiel könnte jeder Verschlusskörper 37a, 37b auch über ausschließlich ihm zugeordnete eigene Federmittel beaufschlagt sein, die sich dann andererseits nicht am jeweils anderen Verschlusskörper abstützen, sondern am Tragkörper 35.

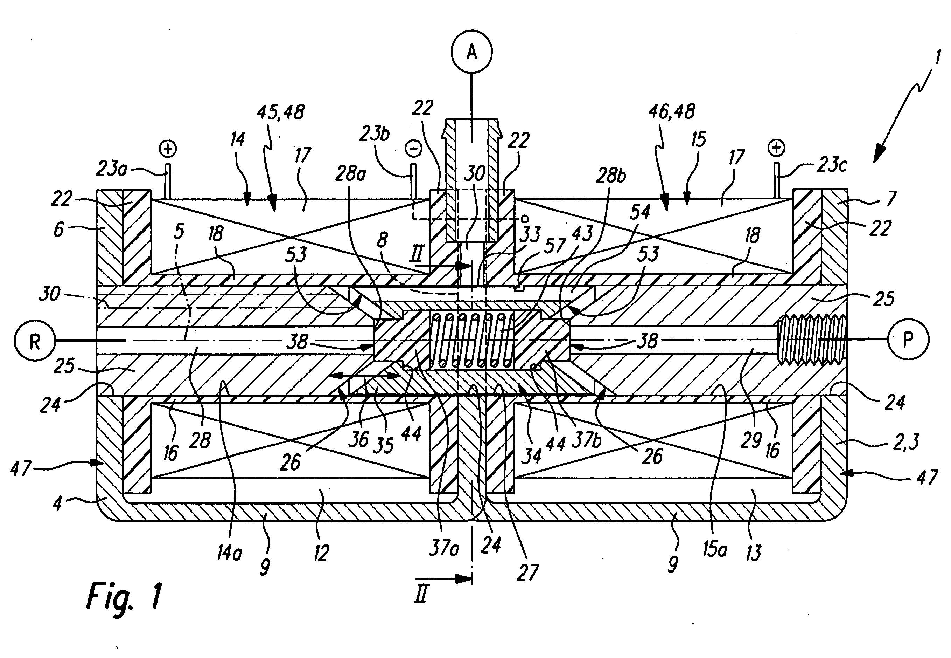

Der Tragkörper 35 ist so ausgebildet, dass der axiale Abstand zwischen den beiden Verschlussflächen 38 in einem Zustand, wenn das Ventilglied 34 noch nicht installiert ist, geringfügig größer ist als der Abstand zwischen den beiden einander zugewandten ersten und zweiten Ventilsitzen 28a, 28b. Allerdings ist das Abstandsübermaß relativ gering und liegt beispielsweise im Bereich zwischen 1/10 und 2/10 mm. Dies hat zur Folge, dass der Tragkörper 35 bei installiertem Ventilglied 34 die aus Figur 1 ersichtliche Mittelstellung einnehmen kann, in der jeder Verschlusskörper 37a, 37b an dem ihm gegenüberliegenden Ventilsitz 28a, 28b dichtend anliegt. In dieser Mittelstellung sind folglich der erste und zweite Ventilkanal 28, 29 gleichzeitig von der Ventilkammer 27 und mithin auch von dem dritten Ventilkanal 30 abgetrennt.

An dem Tragkörper 35 angeordnete Anschlagmittel 44 begrenzen die Ausfahrbewegung jedes Verschlusskörpers 37a, 37b bezüglich des Tragkörpers 35. Sie bestehen beim Ausführungsbeispiel aus je einer ringförmigen Abstufung, an der die Verschlusskörper 37 mit einer ebenfalls abgestuften Außenkontur zur Anlage gelangen. Diese Anschlagmittel 44 sind es auch, die im Zusammenwirken mit den Abstufungen der Verschlusskörper 37a, 37b deren Maximalabstand vor der Installation vorgeben, wie er oben erläutert wurde.

Im installierten Zustand und in der Mittelstellung sind es zudem diese Anschlagmittel 44, die dafür sorgen, dass der Tragkörper 35 eine axial nur minimal spielbehaftete und folglich stabile Relativposition bezüglich der beiden Verschlusskörper 37a, 37b einnimmt.

Der Tragkörper 35 besteht aus einem ferritischen Material, insbesondere aus Eisen. Er fungiert auf diese weise als gemeinsamer beweglicher Anker zweier Elektromagnete 45, 46, die jeweils zusätzlich eine der beiden Spuleneinheiten 14, 15 und eines der stabförmigen Rückschlussteile 25 beinhalten, wobei der Tragkörper 35 auf die von beiden Spuleneinheiten 14, 15 generierbaren Magnetfelder anspricht.

Die Rückschlusseinheit 2 gehört zu beiden Elektromagneten 45, 46. Gedanklich setzt sie sich aus zwei Rückschlusseinrichtungen 47 zusammen, die jeweils eines der stabförmigen Rückschlussteile 25, einen der Außenschenkel 6, 7 und einen der Verbindungsstege 9 enthalten sowie, als gemeinsamen Bestandteil beider Rückschlusseinrichtungen 47, den Innenschenkel 8.

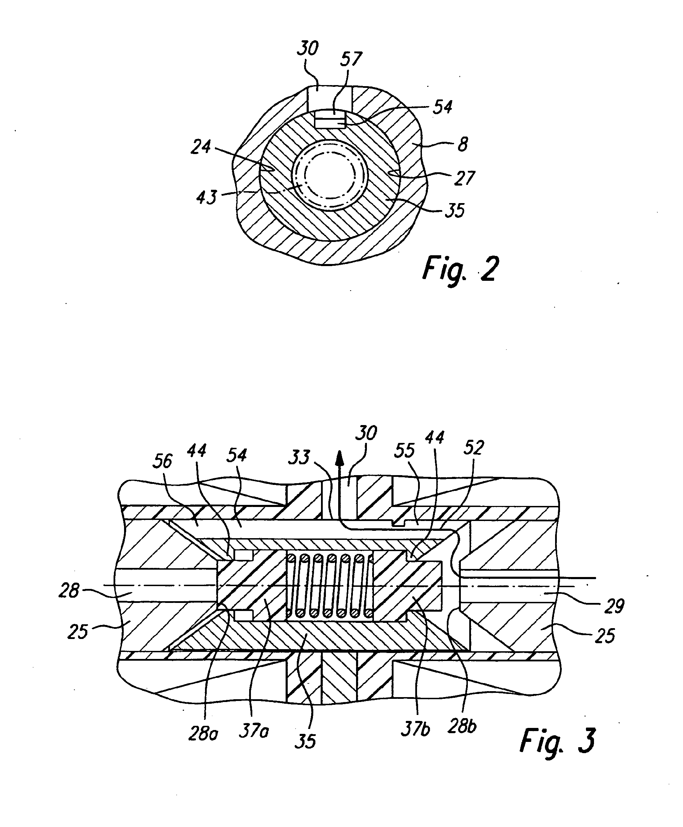

Beide Elektromagnete 45, 46 zusammen bilden eine elektromagnetische Antriebseinrichtung, durch die der Tragkörper 35 ausgehend von der Mittelstellung entweder in Richtung zum ersten Ventilsitz 28a oder in Richtung zum zweiten Ventilsitz 28b auslenkbar ist. Die Figur 3 zeigt eine Schaltstellung bei in Richtung zum ersten Ventilsitz 28a ausgelenktem Tragkörper 35.

Wird der Tragkörper 35 in Richtung zu einem Ventilsitz 28a oder 28b verlagert, stützt sich der in der Bewegungsrichtung orientierte Verschlusskörper 37a oder 37b weiterhin unter Abdichtung am zugeordneten ersten oder zweiten Ventilsitz 28a, 28b ab. Dabei gelangen allerdings die Anschlagmittel 44 außer Eingriff mit diesem vorderen Verschlusskörper, wie dies in der linken Bildhälfte der Figur 3 ersichtlich ist. Gleichzeitig wird der entgegen der aktuellen Bewegungsrichtung orientierte hintere Verschlusskörper - in Figur 3 ist dies der zweite Verschlusskörper 37b - durch das Zusammenwirken mit den Anschlagmitteln 44 vom Tragkörper 35 mitgenommen und von dem ihm zugeordneten Ventilsitz - hier der zweite Ventilsitz 28b - abgehoben. Auf diese weise wird über die ventilkammer 27 hinweg eine Fluidverbindung zwischen dem dritten Ventilkanal 30 und dem nicht mehr Verschlossenen des ersten und zweiten Ventilkanals - beim Ausführungsbeispiel der zweite Ventilkanal 29 - freigegeben. Eine dadurch mögliche Fluidströmung ist in Figur 3 durch Pfeil 52 angedeutet.

Bei ausgehend von der Mittelstellung entgegengesetzt orientierter Auslenkung des Tragkörpers 35 bleibt der zweite Ventilkanal 29 verschlossen und wird der erste Verschlusskörper 37a vom ersten Ventilsitz 28a abgehoben, so dass eine Fluidverbindung zwischen dem dritten Ventilkanal 30 und dem ersten Ventilkanal 28 freigegeben ist.

Die Auslenkrichtung des Tragkörpers 35 hängt davon ab, welche der beiden Spuleneinheiten 14, 15 bestromt wird. Durch Bestromung der in Figur 1 links liegenden ersten Spuleneinheit 14 wird der als Anker fungierende Tragkörper 35 zum stabförmigen Rückschlussglied 25 der ersten Spuleneinheit 14 gezogen. Eine Bestromung der zweiten Spuleneinheit 15 bewirkt eine Verlagerung in Richtung zum stabförmigen Rückschlussteil 25 der zweiten Spuleneinheit 15. Im Betrieb des Ventils kann die Dynamik unterstützt werden, wenn sich die Signale zur Bestromung der beiden Spuleneinheiten 14, 15 überschneiden.

Das Ventil 1 lässt sich als Schaltventil mit drei Schaltstellungen betreiben, wobei der Tragkörper 35 entweder die Mittelstellung oder wahlweise eine von zwei maximal ausgelenkten Stellungen einnimmt. Darüber hinaus ist es aber in vorteilhafter Weise auch als Proportionalventil betreibbar, wobei durch variable Vorgabe der einer Spuleneinheit 14 oder 15 zugeführten Stromstärke der Grad der Auslenkung des Tragkörpers 35 aus der Mittelstellung variabel vorgebbar ist, um den jeweils freigegebenen Strömungsquerschnitt stufenlos verändern zu können.

Bei einer üblichen Betriebsweise wird an den dritten Ventilkanal 30 ein Verbraucher A angeschlossen, der in der Mittelstellung von sowohl der Druckquelle als auch der Atmosphäre abgetrennt ist. Je nach Auslenkrichtung und Betrag der Auslenkung kann der dritte Ventilkanal 30 und folglich der Verbraucher A wahlweise mit der Druckquelle oder mit der Atmosphäre verbunden werden, zweckmäßigerweise mit jeweils veränderlich einstellbarem Strömungsquerschnitt.

Vor allem bei einem Betrieb als Proportionalventil ist es von Vorteil, wenn die inneren Stirnflächen 26 der stabförmigen Rückschlussteile 25 sich konisch verjüngend und zugleich axial erhaben ausgebildet sind. In Verbindung damit ist die jeweils gegenüberliegende Stirnfläche 53 des Tragkörpers 35 ebenfalls konisch ausgebildet, allerdings in komplementärer Weise und folglich axial vertieft. Somit können die stabförmigen Rückschlussteile 25 und der Tragkörper 35 mit ihren einander zugewandten Endabschnitten mehr oder weniger weit ineinander eintauchen. Dies hat einen vor allem für proportionale Ansteuerungen vorteilhaften Verlauf der Kraft-Weg-Kennlinie zur Folge.

Abweichend vom Ausführungsbeispiel könnte die erhabene Kontur und die vertiefte Kontur auch vertauscht sein.

Der Tragkörper 35 ist zweckmäßigerweise so ausgebildet, dass das Fluid, beispielsweise Druckluft, bei geöffnetem erstem oder zweitem Ventilkanal 28, 29 am radial orientierten Außenumfang des Tragkörpers 35 zwischen dem offenen Ventilkanal und dem dritten Ventilkanal 30 überströmen kann. Hierzu ist der Tragkörper 35 zweckmäßigerweise in seinem dem Einmündungsbereich 33 des dritten Ventilkanals 30 zugewandten Außenumfangsbereich mit einer sich über die gesamte axiale Länge des Tragkörpers 35 hinweg erstreckenden Längsnut 54 versehen. Sie fungiert als Strömungsnut und bildet mit ihren beiden Endabschnitten je einen Überströmkanal 55, 56 aus, der die Strömung des Fluides gestattet. Die Realisierung in Form einer axial durchgehenden Längsnut 54 hat den Vorteil, dass keine zwei gesonderten Überströmkanäle 55, 56 ausgebildet werden müssen.

Damit der Tragkörper 35 seine Winkellage um die Hauptachse 5 herum nicht verändert und gewährleistet ist, dass die Längsnut 54 stets gegenüber dem Einmündungsbereich 33 zu liegen kommt, sind zweckmäßigerweise geeignete Verdrehsicherungsmittel 57 vorhanden. Diese bestehen beim Ausführungsbeispiel aus einem an einem der Spulenträger 16 ausgebildeten, radial nach innen ragenden Vorsprung, der in die Längsnut 54 eintaucht. Andere Arten der Verdrehsicherung sind allerdings ebenfalls denkbar.

## Patentansprüche

1. Ventil, mit einer in einem Ventilgehäuse (3) ausgebildeten Ventilkammer (27), die von einem einem ersten Ventilkanal (28) zugeordneten ersten Ventilsitz (28a) und einem diesbezüglich axial beabstandeten, einem zweiten Ventilkanal (29) zugeordneten zweiten Ventilsitz (28b) begrenzt ist und in die außerdem ein dritter Ventilkanal (30) einmündet, wobei jedem Ventilsitz (28a, 28b) einer von zwei Verschlusskörpern (37a, 37b) eines Ventilgliedes (34) gegenüberliegt, die an einem durch eine elektromagnetische Antriebseinrichtung (48) linear bewegbaren Tragkörper (35) des Ventilgliedes (34) relativ zu dem Tragkörper (35) und relativ zueinander bewegbar angeordnet sind, ferner mit Federmitteln (43), durch die die beiden Verschlusskörper (37a, 37b) relativ zum Tragkörper (35) in Richtung zum jeweils gegenüberliegenden Ventilsitz (28a, 28b) beaufschlagt sind, so dass in einer Mittelstellung des Tragkörpers (35) beide Verschlusskörper (37a, 37b) am jeweils gegenüberliegenden Ventilsitz (28a, 28b) dichtend anliegen, und mit am Tragkörper (35) angeordneten Anschlagmitteln (44), durch die bei einer durch die elektromagnetische Antriebseinrichtung (48) verursachten axialen Auslenkung des Tragkörpers (35) aus der Mittelstellung einer der Verschlusskörper (37a oder 37b) mitgenommen und vom zugeordneten Ventilsitz (28a, 28b) abgehoben wird, **dadurch gekennzeichnet, dass** die elektromagnetische Antriebseinrichtung (48) zwei koaxial aufeinanderfolgend angeordnete Elektromagnete (45, 46) mit je mindestens einer bestrombaren Spuleneinheit (14, 15) und einem von axial außen her in den Spuleninnenraum (14a, 15a) hineinragenden ortsfesten Rückschlussteil (25) enthält, wobei die Ventilkammer (27) im Übergangsbereich zwischen den beiden Spuleneinheiten (14, 15) angeordnet ist und sich ein Stückweit in die beiden Spuleninnenräume (14a, 15a) hinein erstreckt, wo sie axial von den beiden Rückschlussteilen (25) begrenzt ist, und dass die beiden Ventilsitze (28a, 28b) an den einander zugewandten inneren Stirnseiten der Rückschlussteile (25) angeordnet sind und der Tragkörper (35) des in der Ventilkammer (27) angeordneten Ventilgliedes (34) als gemeinsamer Anker der beiden Elektromagnete (45, 46) ausgebildet ist.

2. Ventil nach Anspruch 1, **dadurch gekennzeichnet, dass** die beiden Verschlusskörper (37a, 37b) im Bereich der beiden Stirnseiten des Tragkörpers (35) angeordnet sind.

3. Ventil nach Anspruch 1 oder 2, **dadurch gekennzeichnet, dass** die Federmittel (43), ohne sich am Tragkörper (35) abzustützen, unmittelbar zwischen den beiden Verschlusskörpern (37a, 37b) wirksam sind.

4. Ventil nach einem der Ansprüche 1 bis 3, **dadurch gekennzeichnet, dass** der Tragkörper (35) rohrförmig ausgebildet ist und in seinem Innenraum die beiden Verschlusskörper (37a, 37b) und die Federmittel (43) aufnimmt.

5. Ventil nach einem der Ansprüche 1 bis 4, **dadurch gekennzeichnet, dass** die einander zugewandten Stirnflächen (26, 53) der Rückschlussteile (25) und des Tragkörpers (35) komplementär konisch ausgebildet sind, derart, dass die Endabschnitte dieser Bauteile (25, 35) axial ineinander eintauchen können.

6. Ventil nach einem der Ansprüche 1 bis 5, **dadurch gekennzeichnet, dass** der erste und zweite Ventilkanal (28, 29) das zugeordnete Rückschlussteil (25) koaxial durchsetzt und an der äußeren Stirnfläche des betreffenden Rückschlussteils (25) ausmündet.

7. Ventil nach einem der Ansprüche 1 bis 6, **dadurch gekennzeichnet, dass** der dritte Ventilkanal (30) umfangsseitig in die Ventilkammer (27) einmündet.

8. Ventil nach Anspruch 7, **dadurch gekennzeichnet, dass** der dritte Ventilkanal (30) in dem Bereich zwischen den beiden Spuleneinheiten (14, 15) in die Ventilkammer (27) einmündet.

9. Ventil nach einem der Ansprüche 1 bis 8, **dadurch gekennzeichnet, dass** in dem radial zwischen dem Tragkörper (35) und der Wand der Ventilkammer (27) liegenden Bereich mindestens zwei Überströmkanäle (55, 56) ausgebildet sind, die jeweils einen der beiden axial zwischen dem Tragkörper (35) und den Rückschlussteilen (25) liegenden Abschnitte der Ventilkammer (27) mit dem Einmündungsbereich (33) des dritten Ventilkanals (30) verbinden.

10. Ventil nach Anspruch 9, **dadurch gekennzeichnet, dass** die beiden Überströmkanäle (55, 56) gemeinsam von mindestens einer sich über die Länge des Tragkörpers (35) hinweg erstreckenden Längsnut (54) gebildet sind.

11. Ventil nach Anspruch 10, **dadurch gekennzeichnet, dass** die mindestens eine Längsnut (54) im Außenumfang des Tragkörpers (35) ausgebildet ist.

12. Ventil nach einem der Ansprüche 1 bis 11, **dadurch gekennzeichnet, dass** Verdrehsicherungsmittel (57) zum Verhindern eines Verdrehens des Tragkörpers (35) bezüglich der Spuleneinheiten (14, 15) vorhanden sind.

13. Ventil nach einem der Ansprüche 1 bis 12, **dadurch gekennzeichnet, dass** die beiden Spuleneinheiten (14, 15) unmittelbar aneinander anschließend angeordnet sind und mit ihren Spuleninnenräumen (14a, 15a) gemeinsam die Ventilkammer (27) bilden.

14. Ventil nach einem der Ansprüche 1 bis 13, **dadurch gekennzeichnet, dass** die beiden Spuleneinheiten (14, 15) von je einer das Rückschlussteil (25) aufweisenden Rückschlusseinrichtung (47) umschlossen sind.

15. Ventil nach Anspruch 14, **dadurch gekennzeichnet, dass** die beiden Rückschlusseinrichtungen (47) zu einer Rückschlusseinheit (2) zusammengefasst sind.

## Claims

1. Valve, with a valve chamber (27) formed in a valve housing (3), which valve chamber is bounded by a first valve seat (28a) assigned to a first valve passage (28) and a second valve seat (28b) axially spaced from the former and assigned to a second valve passage (29) and into which valve chamber a third valve passage (30) terminates in addition, wherein opposite each valve seat (28a, 28b) there is located one of two closing bodies (37a, 37b) of a valve member (34) which are fitted to a support body (35) of the valve member (34) movable in a linear fashion by an electromagnetic drive device (48) and which are movable relative to each other, further with spring means (43) whereby the two closing bodies (37a, 37b) are pressurised relative to the support body (35) towards the respective opposite valve seat (28a, 28b), so that the two closing bodies (37a, 37b) bear against the respective opposite valve seat (28a, 28b) in a central position of the support body (35) while forming a seal, and with stop means (44) located on the support body (35), by means of which, if the electromagnetic drive device (48) causes a displacement of the support body (35) from the central position, one of the closing bodies (37a or 37b) is carried along and lifted off the associated valve seat (28a, 28b), **characterised in that** the electromagnetic drive device (48) comprises two solenoids (45, 46) arranged one behind the other, each having at least one coil unit (14, 15) to which a current can be applied and a stationary return part (25) axially projecting into the coil interior (14a, 15a) from the outside, wherein the valve chamber (27) is disposed in the transition region between the two coil units (14, 15) and to some extent extends into the two coil interiors (14a, 15a), where it is axially bounded by the two return parts (25), and **in that** the two valve seats (28a, 28b) are disposed on adjacent inner end faces of the return parts (25) and wherein the support body (35) of the valve member (34) located in the valve chamber (27) is designed as a common armature of the two solenoids (45, 46).

2. Valve according to claim 1, **characterised in that** the two closing bodies (37a, 37b) are located in the region of the end faces of the support body (35).

3. Valve according to claim 1 or 2, **characterised in that** the spring means (43) directly act between the two closing bodies (37a, 37b) without being supported on the support body (35).

4. Valve according to any of claims 1 to 3, **characterised in that** the support body (35) is tubular and accommodates the two closing bodies (37a, 37b) and the spring means (43) in its interior.

5. Valve according to any of claims 1 to 4, **characterised in that** the facing end faces (26, 53) of the return parts (25) and the support body (35) are designed conical to complement each other such that the end sections of these components (25, 35) can axially dip into each other.

6. Valve according to any of claims 1 to 5, **characterised in that** the first and the second valve passages (28, 29) coaxially pass through the assigned return part (25) and terminate at the outer end face of the respective return part (25).

7. Valve according to any of claims 1 to 6, **characterised in that** the third valve passage (30) circumferentially terminates into the valve chamber (27).

8. Valve according to claim 7, **characterised in that** the third valve passage (30) terminates into the valve chamber (27) in the region between the two coil units (14, 15).

9. Valve according to any of claims 1 to 8, **characterised in that,** in the region lying radially between the support body (35) and the wall of the valve chamber (27), at least two overflow passages (55, 56) are formed, each of which connects one of the two sections of the valve chamber (27) which lie axially between the support body (35) and the return parts (25) to the termination region (33) of the third valve passage (30).

10. Valve according to claim 9, **characterised in that** the two overflow passages (55, 56) are together represented by at least one longitudinal groove (54) extending along the length of the support body (35).

11. Valve according to claim 10, **characterised in that** the at least one longitudinal groove (54) is formed in the outer circumference of the support body (35).

12. Valve according to any of claims 1 to 11, **characterised in that** anti-rotation means (57) are provided to prevent a rotation of the support body (35) relative to the coil units (14, 15).

13. Valve according to any of claims 1 to 12, **characterised in that** the two coil units (14, 15) directly adjoin each other and, with their coil interiors (14a, 15a), jointly form the valve chamber (27).

14. Valve according to any of claims 1 to 13, **characterised in that** each of the two coil units (14, 15) is enclosed by a return device (47) comprising the return part (25).

15. Valve according to claim 14, **characterised in that** the two return devices (47) are combined to form a return unit (2).

## Revendications

1. Soupape, avec une chambre de soupape (27) formée dans un boîtier de soupape (3), chambre qui est limitée par un premier siège de soupape (28a) associé à un premier canal de soupape (28) et un deuxième siège de soupape (28b) associé à un deuxième canal de soupape (29) et espacé axialement du premier, et dans laquelle débouche en outre un troisième canal de soupape (30), dans laquelle à chaque siège de soupape (28a, 28b) est opposé l'un de deux corps de fermeture (37a, 37b) d'un organe de soupape (34), qui sont montés sur un corps porteur (35) de l'organe de soupape (34) mobile linéairement par un dispositif d'entraînement électromagnétique (48) de manière mobile l'un par rapport à l'autre et par rapport au corps porteur (35), ainsi qu'avec des moyens à ressort (43) par lesquels les deux corps de fermeture (37a, 37b) sont chargés par rapport au corps porteur (35) en direction du siège de soupape (28a, 28b) respectif opposé, de sorte que, dans une position médiane du corps porteur (35), les deux corps de fermeture (37a, 37b) s'appuient de manière hermétique contre le siège de soupape (28a, 28b) respectif opposé, et avec des moyens de butée (44) placés sur le corps porteur (35), par lesquels, en cas de déplacement axial du corps porteur (35) depuis la position médiane, provoqué par le dispositif d'entraînement électromagnétique (48), l'un des corps de fermeture (37a ou 37b) est entraîné et soulevé du siège de soupape (28a, 28b) associé, **caractérisée en ce que** le dispositif d'entraînement électromagnétique (48) comprend deux électroaimants (45, 46) se suivant coaxialement avec chacun au moins une unité de bobine (14, 15) alimentable en courant et une partie de reflux (25) stationnaire formant saillie depuis l'extérieur axialement dans l'intérieur (14a, 15a) de la bobine, dans laquelle la chambre de soupape (27) est placée dans la zone de transition entre les deux unités de bobine (14, 15) et s'étend un peu dans les deux intérieurs de bobine (14a, 15a), où elle est limitée par les deux parties de reflux (25), et **en ce que** les deux sièges de soupape (28a, 28b) sont placés sur les faces frontales intérieures mutuellement en vis-à-vis des parties de reflux (25) et le corps porteur (35) de l'organe de soupape (34) placé dans la chambre de soupape (27) est conformé en induit commun pour les deux électroaimants (45, 46).

2. Soupape selon la revendication 1, **caractérisée en ce que** les deux corps de fermeture (37a, 37b) sont placés au niveau des deux faces frontales du corps porteur (35).

3. Soupape selon la revendication 1 ou 2, **caractérisée en ce que** les moyens à ressort (43), sans s'appuyer sur le corps porteur (35), sont actifs directement entre les deux corps de fermeture (37a, 37b).

4. Soupape selon l'une des revendications 1 à 3, **caractérisée en ce que** le corps porteur (35) est réalisé tubulaire et reçoit dans son intérieur les deux corps de fermeture (37a, 37b) et les moyens à ressort (43).

5. Soupape selon l'une des revendications 1 à 4, **caractérisée en ce que** les surfaces frontales (26, 53) en vis-à-vis des parties de reflux (25) et du corps porteur (35) sont réalisées coniques complémentaires, de telle manière que les sections d'extrémité de ces pièces (25, 35) peuvent s'enfoncer axialement l'une dans l'autre.

6. Soupape selon l'une des revendications 1 à 5, **caractérisée en ce que** le premier et le deuxième canal de soupape (28, 29) traverse coaxialement la partie de reflux (25) associée et débouche sur la face frontale extérieure de la partie de reflux (25) concernée.

7. Soupape selon l'une des revendications 1 à 6, **caractérisée en ce que** le troisième canal de soupape (30) débouche de manière circonférentielle dans la chambre de soupape (27).

8. Soupape selon la revendication 7, **caractérisée en ce que** le troisième canal de soupape (30) débouche dans la chambre de soupape (27) dans la zone située entre les deux unités de bobine (14, 15).

9. Soupape selon l'une des revendications 1 à 8, **caractérisée en ce que** dans la zone située radialement entre le corps porteur (35) et la paroi de la chambre de soupape (27) sont formés au moins deux canaux de trop-plein (55, 56) qui relient chacun l'une des deux sections de la chambre de soupape (27) situées axialement entre le corps porteur (35) et les parties de reflux (25) avec la zone de débouché (33) du troisième canal de soupape (30).

10. Soupape selon la revendication 9, **caractérisée en ce que** les deux canaux de trop-plein (55, 56) sont formés en commun par au moins une rainure longitudinale (54) s'étendant sur la longueur du corps porteur (35).

11. Soupape selon la revendication 10, **caractérisée en ce que** la rainure longitudinale (54) au nombre d'au moins un est formée dans la circonférence extérieure du corps porteur (35).

12. Soupape selon l'une des revendications 1 à 11, **caractérisée en ce que** des moyens de sécurité de rotation (57) sont présents pour empêcher une rotation du corps porteur (35) par rapport aux unités de bobine (14, 15).

13. Soupape selon l'une des revendications 1 à 12, **caractérisée en ce que** les deux unités de soupape (14, 15) sont placées directement à la suite l'une de l'autre et forment en commun, avec leurs intérieurs de bobine (14a, 15a), la chambre de soupape (27).

14. Soupape selon l'une des revendications 1 à 13, **caractérisée en ce que** les deux unités de bobine (14, 15) sont entourés par chacune un dispositif de reflux (47) présentant la partie de reflux (25).

15. Soupape selon la revendication 14, **caractérisée en ce que** les deux dispositifs de reflux (47) sont réunis en une unité de reflux (2).
